# EUROPÄISCHE PATENTSCHRIFT

(11) **EP 2 739 673 B1**
(45) Veröffentlichungstag und Bekanntmachung des Hinweises auf die Patenterteilung: **07.10.2015**
(21) Anmeldenummer: 12741309.4
(22) Anmeldetag: 25.07.2012
(51) Int. Cl.: F16B 11/00, B01J 2/04, B01J 2/30, C08J 3/12

(54) **VERFAHREN ZUR HERSTELLUNG VON DISPERSIONSPULVERN**
PROCESS FOR PRODUCING DISPERSION POWDERS
PROCÉDÉ DE PRÉPARATION DE POUDRES EN DISPERSION

(30) Priorität: 01.08.2011 DE 102011080235
(43) Veröffentlichungstag der Anmeldung: 11.06.2014
(73) Patentinhaber: Wacker Chemie AG, 81737 München (DE)
(72) Erfinder: HERBERT, Michael, 84489 Burghausen (DE); RING, Jochen, 76863 Herxheim (DE); KILLAT, Stefan, 84489 Burghausen (DE); GERSTENBERGER, Bernd, 84489 Burghausen (DE)
(74) Vertreter: Schuderer, Michael
(86) Internationale Anmeldenummer: PCT/EP2012/064560
(87) Internationale Veröffentlichungsnummer: WO 2013/017491

(56) Entgegenhaltungen:
- EP-A1- 0 690 278
- FR-A- 1 546 920
- FR-A1- 2 929 136

## Beschreibung

Die Erfindung betrifft ein Verfahren zur Herstellung von Dispersionspulvern durch Sprühtrocknung von wässrigen Polymerdispersionen in einem Rotationszerstäubungstrockner.

Dispersionspulver sind Polymerpulver, welche durch Sprühtrocknung der entsprechenden wässrigen Polymerdispersionen zugänglich sind. Dabei wird unterschieden zwischen Dispersionspulvern, welche in Wasser redispergierbar sind, und solchen die dieses Eigenschaftsbild nicht aufweisen. In Wasser redispergierbare Polymerpulver werden im Allgemeinen durch Trocknung der entsprechenden wässrigen Polymerdispersionen, in Gegenwart von einer Trocknungshilfe (im Allgemeinen ein Schutzkolloid) und von Antiblockmittel erhalten. Aufgrund des Schutzkolloidanteils wird zum Einen beim Trocknungsvorgang verhindert, dass die Polymerteilchen irreversibel verkleben, da die Polymerteilchen von den wasserlöslichen Schutzkolloid-Teilchen umhüllt werden. Zum Anderen bewirkt diese Schutzkolloid-Matrix, welche sich beim Dispergieren des Polymerpulvers in Wasser wieder auflöst, dass die Polymerpartikel wieder mit der Partikelgröße der Ausgangsdispersion in der wässrigen Redispersion vorliegen.

Zur Minimierung von Pulververblockungen, insbesondere bei Dispersionspulvern auf Basis von Polymerisaten mit einer Glasübergangstemperatur Tg von < 25°C, und zur Verbesserung der Rieselfähigkeit und Fließfähigkeit werden den Dispersionspulvern bei deren Herstellung Antiblockmittel (Antibackmittel) zugegeben.

Das Antiblockmittel (ABM) dient zur Sicherstellung der Rieselfähigkeit und der Lagerstabilität des nach Sprühtrocknung erhaltenen Polymerpulvers (Dispersionspulvers). Antiblockmittel sind insbesondere dann ein essentieller Bestandteil des Dispersionspulvers, wenn aufgrund einer niedrigen Glasübergangstemperatur des Polymers oder starker Hygroskopie Verblockungen des Pulvers bzw. Anbackungen an der Trocknerwand zu erwarten sind. Durch die Bepuderung der Teilchenoberfläche mit Antiblockmittel wird aufgrund geringerer Agglomeratbildung insbesondere auch der Anteil an Grobkorn vermindert, was sich sehr vorteilhaft auf den gesamten Trocknungsprozess sowie auf die Eigenschaften des Pulvers (z.B. Rieselfähigkeit und Lagerstabilität) auswirkt.

Derartige Dispersionspulver werden in vielerlei Anwendungen eingesetzt, unter anderem in Beschichtungsmittel und in Klebemittel für die unterschiedlichsten Substrate. Ein Beispiel ist die Verwendung als Bindepulver für partikuläre Naturmaterialien (Vinnex^{R}-Pulver der Wacker Chemie AG). Weit verbreitet ist deren Anwendung in bauchemischen Produkten, häufig in Verbindung mit mineralischen Bindemitteln (Vinnapas^{R}-Pulver der Wacker Chemie AG). Beispiele hierfür sind Baukleber insbesondere Fliesenkleber, Putze und Mörtelmassen, Farben, Spachtelmassen, Verlaufsmassen, Wärmedämmverbundsysteme und Fugenmörtel. Der Vorteil der in Wasser redispergierbaren Dispersionspulver liegt vor allem in der Möglichkeit sie in vorgefertigten, lagerfähigen Trockenmischungen einzusetzen, gegebenenfalls zusammen mit mineralischen Bindemitteln wie Zement, und diese erst unmittelbar vor der Verwendung durch Zugabe von Wasser gebrauchsfertig zu machen. Derartige Trockenmischungen können gegenüber pastösen Systemen leichter transportiert werden (ohne Wasseranteil) und bieten Vorteile bei der Lagerung, wie zum Beispiel Unempfindlichkeit gegenüber Frost sowie Resistenz gegenüber Mikrobenbefall.

Die Herstellung der Dispersionspulver erfolgt in bekannten Sprühtrocknern, wobei die Polymerdispersion (Speise) im Allgemeinen am oberen Ende des Trockners mittels einer Einstoffdüse unter Druck zerstäubt oder zusammen mit Pressluft über eine Zweistoffdüse oder Mehrstoffdüse zerstäubt oder über einen Rotationszerstäuber zerstäubt wird. Zur Sprühtrocknung mittels eines Rotationszerstäubers wird in der EP 690278 A1 vorgeschlagen das Antiblockmittel mit dem Fördergas unterhalb der Zerstäuberscheibe eines Rotationszerstäubungstrockners einzutragen. Dazu wird das Antiblockmittel mit Förderluft in einer Förderleitung, welche quer durch den Trockner verläuft, an den Rotationszerstäuber herangeführt. Diese Konstruktion hat den Nachteil, dass das querverlaufende Rohr sehr verschmutzungsanfällig ist und die starre Konstruktion den Betrieb des Trockners behindert. Beispielsweise wird mit dieser Konstruktion der Einsatz eines Blasräumers zur Reinigung der Trocknerwände verhindert.

Es bestand die Aufgabe ein Verfahren zur Sprühtrocknung von wässrigen Polymerdispersionen unter Zugabe von Antiblockmittel mittels eines Rotationszerstäubers zur Verfügung zu stellen, mittels dessen eine möglichst gleichmäßige und vollständige Belegung der Polymerteilchen mit Antiblockmittel erhalten wird.

Gegenstand der Erfindung ist ein Verfahren zur Herstellung von Dispersionspulvern mittels Sprühtrocknung von wässrigen Polymerdispersionen und Zugabe von Antiblockmittel, in einem Rotationszerstäubungs-Trockner, dadurch gekennzeichnet, dass das Antiblockmittel mittels Förderluft, ganz oder teilweise, in einen Ringspalt gefördert wird, welcher durch ein um das Gehäuse des Rotationszerstäubers konzentrisch angeordnetes zylindrisches Formteil gebildet wird, und welcher in einem Abstand oberhalb zur Oberkante der Zerstäuberscheibe endet.

Die Basispolymerisate für die Dispersionspulver werden zur Sprühtrocknung in Form deren wässrigen Polymerdispersionen eingebracht. Geeignete Basispolymerisate für die Dispersionspulver sind solche auf Basis von einem oder mehreren ethylenisch ungesättigten Monomeren ausgewählt aus der Gruppe umfassend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen, Olefine oder Diene, Vinylaromaten oder Vinylhalogenide.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 13 C-Atomen, beispielsweise VeoVa9^{R} oder VeoVa10^{R} (Handelsnamen der Firma Momentive). Besonders bevorzugt ist Vinylacetat.

Bevorzugte Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Besonders bevorzugt sind Methylacrylat, Methylmethacrylat, n-Butylacrylat und 2-Ethylhexylacrylat.

Bevorzugte Olefine oder Diene sind Ethylen, Propylen und 1,3-Butadien. Bevorzugte Vinylaromaten sind Styrol und Vinyltoluol. Ein bevorzugtes Vinylhalogenid ist Vinylchlorid.

Gegebenenfalls können noch 0,05 bis 50 Gew.-%, vorzugsweise 1 bis 10 Gew.-%, bezogen auf das Gesamtgewicht des Basispolymerisats, Hilfsmonomere copolymerisiert werden. Beispiele für Hilfsmonomere sind ethylenisch ungesättigte Mono- und Dicarbonsäuren, ethylenisch ungesättigte Carbonsäureamide, ethylenisch ungesättigte Sulfonsäuren bzw. deren Salze, vorvernetzende Comonomere wie mehrfach ethylenisch ungesättigte Comonomere, nachvernetzende Comonomere wie N-Methylolacrylamid, epoxidfunktionelle Comonomere, siliciumfunktionelle Comonomere.

Beispiele für geeignete Homo- und Mischpolymerisate sind Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit einem oder mehreren weiteren Vinylestern, Mischpolymerisate von Vinylacetat mit Ethylen und Acrylsäureester, Mischpolymerisate von Vinylacetat mit Ethylen und Vinylchlorid, Mischpolymerisate von Vinylchlorid und Ethylen und gegebenenfalls einem oder mehreren weiteren Vinylestern, Styrol-Acrylsäureester-Copolymerisate, Styrol-1,3-Butadien-Copolymerisate.

Bevorzugt werden Vinylacetat-Homopolymerisate; Mischpolymerisate von Vinylacetat mit 1 bis 50 Gew.-% von einem oder mehreren weiteren Comonomeren aus der Gruppe der Vinylester mit 1 bis 12 C-Atomen im Carbonsäurerest wie Vinylpropionat, Vinyllaurat, Vinylester von alpha-verzweigten Carbonsäuren mit 5 bis 13 C-Atomen wie VeoVa9^{R}, VeoVa10^{R}, VeoVa11^{R}; Mischpolymerisate von Vinylacetat mit 1 bis 40 Gew.-% Ethylen; Mischpolymerisate von Vinylacetat mit 1 bis 40 Gew.-% Ethylen und 1 bis 50 Gew.-% von einem oder mehreren weiteren Comonomeren aus der Gruppe der Vinylester mit 1 bis 12 C-Atomen im Carbonsäurerest wie Vinylpropionat, Vinyllaurat, Vinylester von alpha-verzweigten Carbonsäuren mit 5 bis 13 C-Atomen wie VeoVa9^{R}, Veo-Va10^{R}, VeoVa11^{R}; Mischpolymerisate von Vinylacetat, 1 bis 40 Gew.-% Ethylen und vorzugsweise 1 bis 60 Gew.-% (Meth)-Acrylsäureester von unverzweigten oder verzweigten Alkoholen mit 1 bis 15 C-Atomen, insbesondere Methylmethacrylat, Methylacrylat, n-Butylacrylat oder 2-Ethylhexylacrylat; Mischpolymerisate mit 30 bis 75 Gew.-% Vinylacetat, 1 bis 30 Gew.-% Vinyllaurat oder Vinylester einer alpha-verzweigten Carbonsäure mit 5 bis 13 C-Atomen, sowie 1 bis 30 Gew.-% (Meth)Acrylsäureester von unverzweigten oder verzweigten Alkoholen mit 1 bis 15 C-Atomen, insbesondere Methylmethacrylat, Methylacrylat, n-Butylacrylat oder 2-Ethylhexylacrylat, welche noch 1 bis 40 Gew.-% Ethylen enthalten können; Mischpolymerisate mit einem oder mehreren Vinylestern mit 1 bis 12 C-Atomen im Carbonsäurerest wie Vinylacetat, Vinylpropionat, Vinyllaurat, Vinylester von alpha-verzweigten Carbonsäuren mit 5 bis 13 C-Atomen wie VeoVa9^{R}, VeoVa10^{R}, VeoVa11^{R}, 1 bis 40 Gew.-% Ethylen und 1 bis 60 Gew.-% Vinylchlorid; wobei die Polymerisate jeweils noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat und gegebenenfalls Ethylen; Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Styrol-1,3-Butadien-Copolymerisate; wobei die Polymerisate noch die genannten Hilfsmonomere in den genannten Mengen enthalten können, und sich die Angaben in Gew.-% auf jeweils 100 Gew.-% aufaddieren.

Die Monomerauswahl bzw. die Auswahl der Gewichtsanteile der Comonomere erfolgt dabei so, dass im Allgemeinen eine Glasübergangstemperatur Tg von -50°C bis +50°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise voraus berechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Basispolymerisate erfolgt vorzugsweise nach dem Emulsionspolymerisationsverfahren. Die Polymerisationstemperatur ist vorzugsweise zwischen 40°C und 100°C, besonders bevorzugt zwischen 60°C und 90°C. Bei der Copolymerisation von gasförmigen Comonomeren wie Ethylen, 1,3-Butadien oder Vinylchlorid kann auch unter Druck, im Allgemeinen zwischen 5 bar und 100 bar, gearbeitet werden.

Die Initiierung der Polymerisation erfolgt vorzugsweise mit den für die Emulsionspolymerisation gebräuchlichen wasserlöslichen Initiatoren oder Redox-Initiator-Kombinationen.

Die Polymerisation erfolgt in Gegenwart von Schutzkolloiden und/oder Emulgatoren. Geeignete Schutzkolloide für die Polymerisation sind Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate, Dextrine und Cyclodextrine; Proteine wie Kasein oder Kaseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)-acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015) verwendet.

Wird in Gegenwart von Emulgatoren polymerisiert, beträgt deren Menge 1 bis 5 Gew.-%, bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Nach Abschluss der Polymerisation kann zur Restmonomerentfernung in Anwendung bekannter Methoden nachpolymerisiert werden, im Allgemeinen durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die damit erhältlichen wässrigen Polymerdispersionen haben einen Feststoffgehalt von 30 bis 75 Gew.-%, vorzugsweise von 50 bis 60 Gew.-%.

Das Herstellungsverfahren der Polymerdispersion wird beispielsweise in der EP 1916275 A1 beschrieben, deren diesbezügliche Angaben Teil der Anmeldung sind (incorporated here by reference).

Zur Herstellung der Dispersionspulver werden die wässrigen Dispersionen in Gegenwart von Antiblockmittel, gegebenenfalls nach Zusatz von Schutzkolloiden als Trocknungshilfe zur Polymerdispersion, mittels Sprühtrocknung getrocknet. In der Regel wird die Trocknungshilfe (Schutzkolloid) in einer Gesamtmenge von 0,5 bis 30 Gew.-%, bezogen auf das Basispolymerisat der Dispersion, eingesetzt. Geeignete Trocknungshilfen sind die vorher als Schutzkolloide aufgezählten Substanzen. Als weitere Bestandteile der Dispersionspulver können der Polymerdispersion weitere Additive zugesetzt werden, wie zum Beispiel Entschäumer, Hydrophobierungsmittel und rheologische Additive. Die mit Schutzkolloid und gegebenenfalls weiteren Additiven modifizierte Polymerdispersion, das heißt die zu trocknende Mischung aus Polymerdispersion, Schutzkolloid und gegebenenfalls weiteren Additiven bezeichnet man im Fachjargon auch als "Speise" oder "Feed".

Geeignete Antiblockmittel (Antibackmittel) sind dem Fachmann bekannt, beispielsweise Aluminiumsilikate wie Kaolin, Bentonit, pyrogene Kieselsäure oder gefällte Kieselsäure, welche gegebenenfalls hydrophobiert sein können, Talkum, Tone, Leichtspat, Carbonate wie Calciumcarbonat, Magnesiumcarbonat und Ca/Mg-Carbonat, Bariumsulfat. Es können auch Gemische von Antiblockmitteln eingesetzt werden. Die Antiblockmittel werden im Allgemeinen in einer Menge von 0,1 bis 30 Gew.-%, vorzugsweise 2 bis 30 Gew.-%, besonders bevorzugt 7 bis 30 Gew.-%, jeweils bezogen auf das Gesamtgewicht der polymeren Bestandteile der zu zerstäubenden Polymerdispersion eingesetzt. Im Falle von pyrogener Kieselsäure oder gefällter Kieselsäure werden vorzugsweise 0,1 bis 2 Gew.-%, bezogen auf die polymeren Bestandteile der zu zerstäubenden Polymerdispersion, eingesetzt. Der Anteil der polymeren Bestandteile der zu zerstäubenden Polymerdispersion setzt sich zusammen aus dem Basispolymerisat der Polymerdispersion und gegebenenfalls dem Schutzkolloidanteil.

Die Sprühtrocknung erfolgt in üblichen, mit einer Zerstäuberscheibe ausgerüsteten, Sprühtrocknungsanlagen (Rotationszerstäubungs-Trockner), bei denen die Energie zur Verdampfung der wässrigen Phase durch Wärmeleitung aus dem Trocknungsgas auf die zu trocknende Polymerdispersion (Speise) übertragen wird. Bei Rotationszerstäubungs-Trocknern ist der Trockenturm mit einem Rotationszerstäuber ausgerüstet. Ein Rotationszerstäuber verfügt über eine Antriebseinheit (Motor), über ein Zerstäubergehäuse, welches die Antriebswelle umgibt, und eine Zerstäuberscheibe. Die Trocknung erfolgt durch innige Vermischung der versprühten Polymerdispersion mit dem Trocknungsgas. Als Trocknungsgas wird im Allgemeinen Luft eingesetzt.

Zur Beschleunigung der Trocknung wird das Trocknungsgas vorerwärmt, vorzugsweise auf eine Eintrittstemperatur von 130°C bis 210°C (Heißluft). Vorzugsweise wird auch die zu trocknende Polymerdispersion (Speise) vorerwärmt, im Allgemeinen auf eine Speisetemperatur von 50°C bis 98°C. Die Sprühtrocknung erfolgt vorzugsweise nach dem Gleichstromprinzip. Die Polymerdispersion (Speise) wird dabei mittels einer Zerstäuberscheibe zerstäubt. Die Zerstäuberscheibe kann unterschiedliche Geometrien haben und beispielsweise eine Lochscheibe, Düsenscheibe, Tellerscheibe, atomizer caps oder eine mehrreihige Lochscheibe (Lochzylinder) sein.

Die Polymerdispersion und das Trocknungsgas werden am oberen Ende des Sprühtrockners, im Allgemeinen ein zylinderförmiger Turm (Trocknerturm) mit einem Volumen von bis zu mehreren hundert Kubikmetern, zugeführt. Am unteren Ende wird das getrocknete Polymerpulver mit dem Trocknungsgas ausgetragen und mittels eines Filterabscheiders und/oder Zyklonabscheiders isoliert. Die Austrittstemperatur des Trocknungsgases beträgt etwa 45°C bis 120°C, je nach Anlage, Tg des Harzes und gewünschtem Trocknungsgrad.

Die Zugabe des Antiblockmittels erfolgt zumindest teilweise kontinuierlich und zeitgleich, aber räumlich getrennt von der zu zerstäubenden Polymerdispersion (Speise). Dazu wird das Antiblockmittel in einer Förderleitung mittels eines Fördergases, im Allgemeinen Luft (Förderluft), zur Trocknung in den Trocknerturm gefördert. Die Fördergasgeschwindigkeit beträgt im Allgemeinen 20 bis 50 m/s, vorzugsweise 30 bis 50 m/s.

Bei dem erfindungsgemäßen Verfahren wird die mit Antiblockmittel beladene Förderluft von oben in einen, an dem Zerstäubergehäuse des Rotationszerstäubers angeordneten Ringspalt gefördert. Der Ringspalt wird durch ein konzentrisch um das Zerstäubergehäuse zylindrisch angeordnetes Formteil gebildet, welches das Zerstäubergehäuse vollständig umschließt und welches in einem Abstand oberhalb zur Oberkante der Zerstäuberscheibe endet. Bei dem Formteil handelt es sich im Allgemeinen um ein Blech (Stahlblech). Das Formteil (Blech) umgibt im Allgemeinen das Zerstäubergehäuse in Form einer zylindrischen Röhre in einem Abstand, welcher der Spaltbreite des Ringspalts entspricht.

Die Spaltbreite, das heißt der Abstand des Formteils von dem Zerstäubergehäuse beträgt vorzugsweise 0,5 cm bis 10 cm, besonders bevorzugt 0,5 cm bis 5 cm. Der Abstand des unteren Endes des Formteils von der Oberkante der Zerstäuberscheibe hängt von der Dimensionierung der Sprühtrocknungsanlage ab und beträgt vorzugsweise 0,01 bis 1,0 m zur Oberkante der Zerstäuberscheibe.

In einer besonders bevorzugten Ausführungsform ist das den Ringspalt begrenzende Formteil (Blech) vertikal verschiebbar um den Abstand zur Oberkante der Zerstäuberscheibe zu optimieren. Generell ist es von Vorteil, das Antiblockmittel möglichst nahe an der Zerstäuberscheibe einzubringen. Andererseits darf die Zugabe nicht so nah an der Zerstäuberscheibe erfolgen, dass das Antiblockmittel in das noch nasse Polymerpulverteilchen einsinkt und somit unwirksam wird. Mit dem vertikal verschiebbaren Ringspalt lässt sich der Abstand zur Oberkante der Zerstäuberscheibe für die zu trocknende Polymerdispersion und das zu verwendende Antiblockmittel optimieren.

Im Allgemeinen wird ein Anteil von 0,5 bis 100 Gew.-% des Antiblockmittels über den Ringspalt zugeführt. Beim Einsatz eines Gemisches von Antiblockmitteln kann so vorgegangen werden, dass ein Antiblockmittel vollständig über den Ringspalt zugegeben wird und das weitere Antiblockmittel nicht dem Ringspalt zugeführt wird. Der Anteil an Antiblockmittel, welcher nicht dem Ringspalt zugeführt wird, kann der zur Trocknung zugeführten Heißluft im Heißluftkanal zugegeben werden und/oder direkt in den Trocknerturm gefördert werden und/oder dem getrockneten Dispersionspulver nachträglich, beispielsweise nach der Filterabscheidung und/oder Zyklonabscheidung, zugegeben werden.

Antiblockmittel mit einem niederen Schüttgewicht von < 150 g/l, beispielsweise pyrogene Kieselsäure oder gefällte Kieselsäure, werden vorzugsweise zu mindestens 70 Gew.-%, besonders bevorzugt zu etwa 100 Gew.-% über den Ringspalt zugeführt. Diese Antiblockmittel werden vorzugsweise in relativ geringer Menge von 0,1 bis 5 Gew.-%, bezogen auf die polymeren Bestandteile der zu zerstäubenden Polymerdispersion, eingesetzt.

Die Zuführung des Antiblockmittels über den Ringspalt ist insbesondere dann von Vorteil, wenn nur relativ geringe Mengen an Antiblockmittel eingesetzt werden, das heißt bei vorzugsweise 0,1 bis 5 Gew.-% Antiblockmittel, bezogen auf die polymeren Bestandteile der zu zerstäubenden Polymerdispersion. In diesem Fall werden auch vorzugsweise mindestens 70 Gew.-%, besonders bevorzugt etwa 100 Gew.-% über den Ringspalt zugeführt.

Das Verfahren eignet sich insbesondere zur Ausrüstung von Dispersionspulvern mit feinteiligen und leichten Antiblockmitteln, gegebenenfalls im Gemisch mit weiterem Antiblockmittel. Bevorzugt sind daher ein oder mehrere Antiblockmittel aus der Gruppe enthaltend Aluminiumsilikate wie Kaolin, pyrogene Kieselsäure oder gefällte Kieselsäure, welche gegebenenfalls hydrophobiert sein können, und gegebenenfalls im Gemisch mit einem oder mehreren weiteren Antiblockmittel(n), zugegeben werden. Die Teilchengröße dieser Antiblockmittel beträgt vorzugsweise 0,01 bis 5,0 µm im Falle der Primärteilchen bzw. 10 bis 250 µm beim Vorliegen von Agglomeraten (jeweils mittlere Teilchendurchmesser bestimmt mittels Lasergranulometrie, zum Beispiel mittels Streulichtmessung in einem Beckman Coulter LS Laserpartikelanalysator). Das Schüttgewicht solcher Antiblockmittel beträgt < 150 g/l.

Mit dem erfindungsgemäßen Verfahren wird es ermöglicht, dass die Zugabe von Antiblockmitteln sehr nahe an der Zerstäuberscheibe erfolgen kann, ohne störende Einbauten im Trocknerturm. Besonders beim Einsatz von feinteiligen oder leichten Antiblockmitteln, oder beim Einsatz von geringen Mengen an Antiblockmitteln wird damit die Belegung der Polymerteilchen mit Antiblockmittel verbessert.

Die nachfolgenden Beispiele dienen der weiteren Erläuterung der Erfindung:

### Beispiel 1:

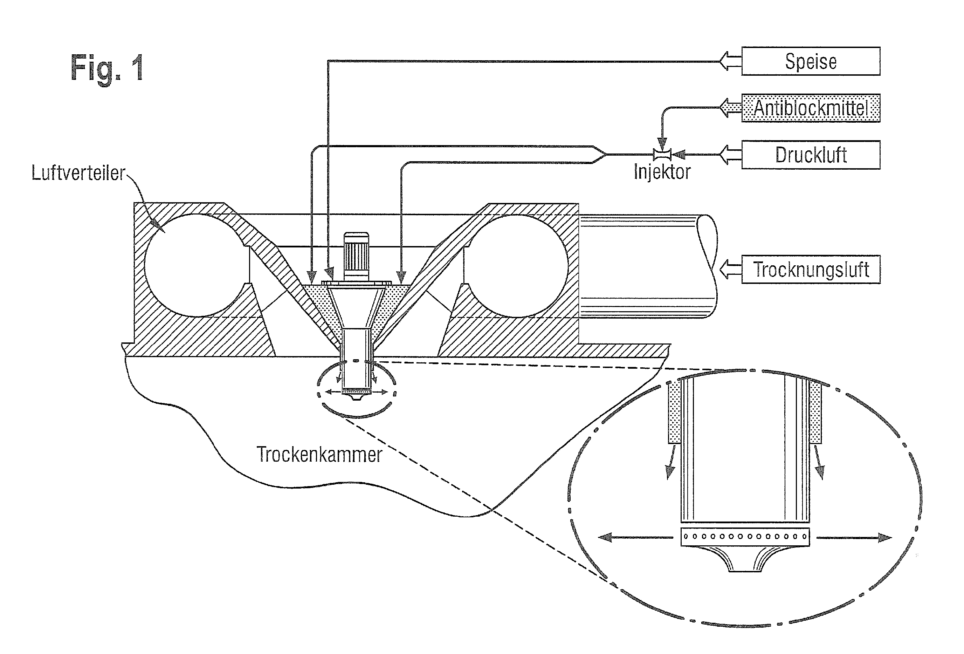

Die Sprühtrocknung erfolgte in einem handelsüblichen Sprühtrocknungsturm mit eingebautem Rotationszerstäuber (Rotationszerstäubungs-Trockner) mit einer Lochscheibe (Zerstäuberscheibe) analog Abbildung 1.

Die weiteren technischen Daten der Sprühtrocknung waren wie folgt:
(Volumen des Sprühtrocknungsturms ca. 500 m³, Speiserate ca. 4200 kg/h, Umfangsgeschwindigkeit der Zerstäuberscheibe ca. 140 m/s, Trocknungsluftmenge ca. 50000 m³/h, Fördergasgeschwindigkeit ABM 40 m/s, Trocknungslufteintrittstemperatur ca. 160°C, Trocknungsluftaustrittstemperatur ca. 80°C.

Es wurde eine wässrige Vinylacetat/Ethylen-Dispersion (Polymerzusammensetzung 80 Gew.-% Vinylacetat und 20 Gew.-% Ethylen, Festgehalt der Dispersion 52 Gew.-%) nach Zugabe von 10 Gew.-%, bezogen auf Copolymer, einer wässrigen Polyvinylalkohollösung mit einer Höppler-Viskosität von 4 mPas (in 4 %-iger wässriger Lösung, Methode nach Höppler bei 20°C, DIN 53015) und einem Hydrolysegrad von 88 Mol-% sprühgetrocknet. Hierbei wurde mittels Verdünnungswasser die Speiseviskosität auf 400 bis 500 mPas eingestellt (gemessen bei 20°C mittels Rotationsviskosimeter bei 20 U/min). Die Speise wurde auf 95°C vorgewärmt. Als Antiblockmittel wurde eine feinteilige, hochdisperse Kieselsäure (HDK^{R} H20) mit einer mittleren Teilchengröße von 10 bis 250 µm (mittlere Teilchendurchmesser bestimmt mittels Lasergranulometrie) und in einer Menge von 0,5 Gew.-%, bezogen auf Festanteil Copolymer und Polyvinylalkohol, zugegeben. Die Kieselsäure und das Fördergas wurden in einer Venturi-Düse gemischt und in den Ringspalt geführt, der um das Zerstäubergehäuse mit einer Spaltbreite von 4 cm angeordnet war und einen vertikalen Abstand zur Oberkante der Zerstäuberscheibe von 40 cm hatte. Zusätzlich wurden noch 10 Gew.-% Calciumcarbonat (Omyacarb^{R} 5GU), bezogen auf Festanteil Copolymer und Polyvinylalkohol, als Antiblockmittel mit der Trocknungsluft (Heißluft) zugegeben.

Die Sprühtrocknung erfolgte über 2 Tage hinweg problemlos und lieferte ein frei fließendes, blockstabiles Pulver. Es wurden keine Anbackungen an der Trocknerwand beobachtet. Die Menge an Überkorn, welches als Pulverteilchen größer 1000 µm (solche, welche von einem Sieb mit einer Maschenweite von 1000 µm zurückgehalten werden) definiert wurde, lag bei 0,1 Gew.-%, bezogen auf die Gesamtausbeute an Polymerpulver.

Mittels Rasterelektronenmikroskopie konnte verifiziert werden, dass die Kieselsäure die Teilchenoberfläche der Polymerteilchen vollständig und gleichmäßig mit Antiblockmittel belegt.

### Vergleichsbeispiel 1:

Es wurde wie in Beispiel 1 vorgegangen, nur dass das den Ringspalt bildende Blech demontiert wurde und das gesamte Antiblockmittel vollständig über die Trocknungsluft zugeführt wurde.

Die Sprühtrocknung konnte zwar immer noch 2 Tage unterbrechungsfrei durchgeführt werden, jedoch lag die Menge an Überkorn (Pulverteilchen größer 1000 µm) bei 2,8 Gew.-%. Weiterhin zeigte eine Inspektion des Trockners nach Trocknungsende eine mäßig starke Wandbelegung.

Die Rasterelektronenmikroskopie zeigte eine deutlich schlechtere (unvollständigere) und ungleichmäßigere Belegung der Teilchenoberfläche mit Kieselsäure.

### Beispiel 2:

Es wurde wie in Beispiel 1 vorgegangen mit dem Unterschied, dass der vertikale Abstand zur Oberkante der Zerstäuberscheibe auf 80 cm erhöht wurde.

Die Menge an Überkorn lag bei 0,4 Gew.-%, bezogen auf die Gesamtausbeute an Polymerpulver.

Die Teilchenoberfläche der Polymerteilchen war vollständig und gleichmäßig mit Antiblockmittel belegt.

### Beispiel 3:

Es wurde wie in Beispiel 1 vorgegangen mit dem Unterschied, dass kein Calciumcarbonat über die Trocknungsluft zugegeben wurde.

Die Menge an Überkorn lag bei 0,2 Gew.-%, bezogen auf die Gesamtausbeute an Polymerpulver.

Die Teilchenoberfläche der Polymerteilchen war vollständig und gleichmäßig mit Antiblockmittel belegt.

Die Blockstabilität des Pulvers war gut.

### Vergleichsbeispiel 2:

Es wurde wie in Vergleichsbeispiel 1 vorgegangen, mit dem Unterschied, dass kein Calciumcarbonat, sondern nur HDK^{R} H20 über die Trocknungsluft zugegeben wurde.

Es wurden sehr starke Anbackungen an der Trocknerwand beobachtet. Die Menge an Überkorn lag bei 4,3 Gew.-%, bezogen auf die Gesamtausbeute an Polymerpulver.

Die Teilchenoberfläche der Polymerteilchen war unvollständig und kaum mit Antiblockmittel belegt.

Die Blockstabilität des Pulvers war sehr schlecht.

### Beispiel 4:

Es wurde wie in Beispiel 1 vorgegangen, mit dem Unterschied, dass anstelle der hochdispersen Kieselsäure 5 Gew.-% Kaolin (Burgess No.-20-SD^{R}) über den Ringspalt zugegeben wurde, und die Menge des über die Trocknungsluft zugegebenen Calciumcarbonats (Omyacarb^{R} 5GU) auf 5 Gew.-% reduziert wurde. zusätzlich noch 5 Gew.-% Calciumcarbonat (Omyacarb^{R} 5GU) mit der Trocknungsluft zugegeben wurde.

Die Menge an Überkorn lag bei 0,4 Gew.-%, bezogen auf die Gesamtausbeute an Polymerpulver.

Die Teilchenoberfläche der Polymerteilchen war größtenteils und gleichmäßig mit Antiblockmittel belegt. Ein Teil des Kaolins war in das Polymerteilchen eingesunken.

### Beispiel 5:

Es wurde wie in Beispiel 4 vorgegangen, mit dem Unterschied, dass der vertikale Abstand zur Oberkante der Zerstäuberscheibe auf 80 cm erhöht wurde.

Die Menge an Überkorn lag bei 0,2 Gew.-%, bezogen auf die Gesamtausbeute an Polymerpulver.

Die Teilchenoberfläche der Polymerteilchen war vollständig und gleichmäßig mit Antiblockmittel belegt. Nur sehr wenige Kaolinpartikel sind in das Polymerteilchen eingesunken.

### Vergleichsbeispiel 3:

Es wurde wie in Beispiel 4 vorgegangen, mit dem Unterschied, dass das den Ringspalt bildende Blech demontiert wurde und das gesamte Antiblockmittel vollständig über die Trocknungsluft zugeführt wurde.

Es wurden mäßig starke Anbackungen an der Trocknerwand beobachtet. Die Menge an Überkorn lag bei 1,9 Gew.-%, bezogen auf die Gesamtausbeute an Polymerpulver.

Die Teilchenoberfläche der Polymerteilchen war unvollständig und ungleichmäßig mit Antiblockmittel belegt.

Die Blockstabilität des Pulvers war schlecht.

Aus dem Vergleich der Beispiele 1 bzw. Beispiel 2 mit Vergleichsbeispiel V1 ist ersichtlich, dass die Zugabe von Antiblockmittel sehr nahe an der Zerstäuberscheibe zu besserer Belegung der Polymerteilchen und Bildung von weniger Überkorn führt. Identisches Ergebnis zeigt der Vergleich von Beispiel 4 bzw. Beispiel 5 mit Vergleichsbeispiel V3.

Vergleich des Beispiels 3 mit Vergleichsbeispiel V2 macht besonders deutlich, dass das erfindungsgemäße Verfahren besonders beim Einsatz von feinteiligen oder leichten Antiblockmitteln, hier HDK^{R} H20, und gleichzeitig beim Einsatz von geringen Mengen an Antiblockmitteln dennoch eine sehr gute Belegung der Polymerteilchen mit Antiblockmittel ermöglicht, was zur guten Blockstabilität des Polymerpulvers führt.

In der besonders bevorzugten Ausführungsform ist das den Ringspalt begrenzende Formteil (Blech) vertikal verschiebbar um den Abstand zur Oberkante der Zerstäuberscheibe für die zu trocknende Polymerdispersion und das zu verwendende Antiblockmittel zu optimieren. Dies wurde in Beispiel 1 und Beispiel 2 bzw. Beispiel 4 und Beispiel 5 untersucht. Für die geprüften Antiblockmittel, HDK^{R} H20 bzw. Kaolin, können unterschiedliche Abstände zwischen Unterkante Ringspalt und Oberkante der Zerstäuberscheibe eingestellt werden, wenn zum Beispiel die Menge an gebildetem Überkorn minimiert werden soll.

## Patentansprüche

1. Verfahren zur Herstellung von Dispersionspulvern mittels Sprühtrocknung von wässrigen Polymerdispersionen und Zugabe von Antiblockmittel, in einem Rotationszerstäubungs-Trockner, **dadurch gekennzeichnet, dass** das Antiblockmittel mittels Förderluft, ganz oder teilweise, in einen Ringspalt gefördert wird, welcher durch ein um das Gehäuse des Rotationszerstäubers konzentrisch angeordnetes Formteil gebildet wird, und welcher in einem Abstand oberhalb zur Oberkante der Zerstäuberscheibe des Rotationszerstäubers endet.

2. Verfahren nach Anspruch 1, **dadurch gekennzeichnet, dass** das den Ringspalt begrenzende Formteil vertikal verschiebbar ist.

3. Verfahren nach Anspruch 1 oder 2, **dadurch gekennzeichnet, dass** die Spaltbreite des Ringspalts 0,5 cm bis 10 cm beträgt.

4. Verfahren nach Anspruch 1 bis 3, **dadurch gekennzeichnet, dass** der Abstand des unteren Endes des den Ringspalt begrenzenden Formteils von der Oberkante der Zerstäuberscheibe 0,01 bis 1,0 m beträgt.

5. Verfahren nach Anspruch 1 bis 4, **dadurch gekennzeichnet, dass** ein Anteil von 0,5 bis 100 Gew.-% des Antiblockmittels über den Ringspalt zugeführt wird.

6. Verfahren nach Anspruch 1 bis 5, **dadurch gekennzeichnet, dass** der Anteil an Antiblockmittel, welcher nicht in den Ringspalt gefördert wird, der zur Trocknung zugeführten Heißluft im Heißluftkanal und/oder direkt in den Trocknerturm und/oder dem getrockneten Dispersionspulver nachträglich zugegeben wird.

7. Verfahren nach Anspruch 1 bis 6, **dadurch gekennzeichnet, dass** Antiblockmittel mit einem niederen Schüttgewicht von < 150 g/l zu mindestens 70 Gew.-% über den Ringspalt zugeführt werden.

8. Verfahren nach Anspruch 1 bis 7, **dadurch gekennzeichnet, dass** 0,1 bis 5 Gew.-% Antiblockmittel, bezogen auf die polymeren Bestandteile der zu zerstäubenden Polymerdispersion zugegeben werden und mindestens 70 Gew.-% über den Ringspalt zugeführt werden.

9. Verfahren nach Anspruch 1 bis 8, **dadurch gekennzeichnet, dass** ein oder mehrere Antiblockmittel aus der Gruppe enthaltend Aluminiumsilikate wie Kaolin, pyrogene Kieselsäure oder gefällte Kieselsäure, welche gegebenenfalls hydrophobiert sind, gegebenenfalls im Gemisch mit einem oder mehreren weiteren Antiblockmitteln, zugegeben wird.

10. Verfahren nach Anspruch 9, **dadurch gekennzeichnet, dass** das Antiblockmittel aus der Gruppe enthaltend Aluminiumsilikate wie Kaolin, pyrogene Kieselsäure oder gefällte Kieselsäure, welche gegebenenfalls hydrophobiert sind, zu mindestens 70 Gew.-% über den Ringspalt zugeführt werden.

## Claims

1. Process for producing dispersion powders by means of spray-drying of aqueous polymer dispersions and addition of antiblocking agent in a rotary atomization dryer, **characterized in that** the antiblocking agent is conveyed by means of compressed air, wholly or partly, into an annular gap which is formed by a formed part arranged concentrically around the housing of the rotary atomizer, and which ends at a distance above the upper edge of the atomizer disk of the rotary atomizer.

2. Process according to Claim 1, **characterized in that** the formed part which bounds the annular gap can be moved vertically.

3. Process according to Claim 1 or 2, **characterized in that** the gap width of the annular gap is 0.5 cm to 10 cm.

4. Process according to Claim 1 to 3, **characterized in that** the distance of the lower end of the formed part which bounds the annular gap from the upper edge of the atomizer disk is 0.01 to 1.0 m.

5. Process according to Claim 1 to 4, **characterized in that** a proportion of 0.5 to 100% by weight of the antiblocking agent is supplied via the annular gap.

6. Process according to Claim 1 to 5, **characterized in that** the proportion of antiblocking agent which is not conveyed into the annular gap is added to the hot air supplied for drying in the hot air channel and/or directly into the drier tower and/or subsequently to the dried dispersion powder.

7. Process according to Claim 1 to 6, **characterized in that** antiblocking agents having a low bulk density of < 150 g/l are supplied via the annular gap to an extent of at least 70% by weight.

8. Process according to Claim 1 to 7, **characterized in that** 0.1 to 5% by weight of antiblocking agents are added, based on the polymeric constituents of the polymer dispersion to be atomized, and at least 70% by weight is supplied via the annular gap.

9. Process according to Claim 1 to 8, **characterized in that** one or more antiblocking agents from the group comprising aluminum silicates such as kaolin, fumed silica or precipitated silica, which have optionally been hydrophobized, optionally in a mixture with one or more further antiblocking agents, is/are added.

10. Process according to Claim 9, **characterized in that** the antiblocking agent from the group comprising aluminum silicates such as kaolin, fumed silica or precipitated silica, which have optionally been hydrophobized, is supplied via the annular gap to an extent of at least 70% by weight.

## Revendications

1. Procédé de fabrication de poudres de dispersion par séchage par pulvérisation de dispersions polymères aqueuses et ajout d'agents anti-adhérents, dans un séchoir à atomisation rotatif, **caractérisé en ce que** l'agent anti-adhérent est transporté par un air de transport, en totalité ou en partie, dans une fente annulaire, qui est formée par une pièce moulée agencée concentriquement autour du boîtier de l'atomiseur rotatif et qui finit à une distance au-dessus du bord supérieur du disque d'atomisation de l'atomiseur rotatif.

2. Procédé selon la revendication 1, **caractérisé en ce que** la pièce moulée délimitant la fente annulaire est décalable verticalement.

3. Procédé selon la revendication 1 ou 2, **caractérisé en ce que** la largeur de la fente annulaire est de 0,5 cm à 10 cm.

4. Procédé selon les revendications 1 à 3, **caractérisé en ce que** la distance entre l'extrémité inférieure de la pièce moulée délimitant la fente annulaire et le bord supérieur du disque d'atomisation est de 0,01 à 1,0 m.

5. Procédé selon les revendications 1 à 4, **caractérisé en ce qu'**une proportion de 0,5 à 100 % en poids de l'agent anti-adhérent est introduite par la fente.

6. Procédé selon les revendications 1 à 5, **caractérisé en ce que** la proportion d'agent anti-adhérent qui n'est pas transportée dans la fente annulaire est ajoutée ultérieurement à l'air chaud introduit pour le séchage dans le canal d'air chaud et/ou directement dans la tour de séchage et/ou dans la poudre de dispersion séchée.

7. Procédé selon les revendications 1 à 6, **caractérisé en ce que** l'agent anti-adhérent ayant une densité apparente inférieure de < 150 g/l est introduit à hauteur de 70 % en poids par la fente annulaire.

8. Procédé selon les revendications 1 à 7, **caractérisé en ce que** 0,1 à 5 % en poids d'agents anti-adhérents, par rapport aux constituants polymères de la dispersion polymère à atomiser, sont ajoutés et au moins 70 % en poids sont introduits par la fente annulaire.

9. Procédé selon les revendications 1 à 8, **caractérisé en ce qu'**un ou plusieurs agents anti-adhérents du groupe contenant les silicates d'aluminium tels que le kaolin, la silice pyrogénée et la silice précipitée, qui sont éventuellement hydrophobés, sont ajoutés, éventuellement en mélange avec un ou plusieurs autres agents anti-adhérents.

10. Procédé selon la revendication 9, **caractérisé en ce que** l'agent anti-adhérent du groupe contenant les silicates d'aluminium tels que le kaolin, la silice pyrogénée, la silice précipitée, qui sont éventuellement hydrophobés, est introduit à hauteur d'au moins 70 % en poids par la fente annulaire.
